# FASCICULE DE BREVET EUROPEEN

(11) **EP 2 177 775 B1**
(45) Date de publication et mention de la délivrance du brevet: **14.12.2011**
(21) Numéro de dépôt: 09172754.5
(22) Date de dépôt: 12.10.2009
(51) Int. Cl.: F16B 37/04

(54) **Agencement d'assemblage de deux pièces telles que deux panneaux à l'aide d'un dispositif à écrou à cage**
Anlage zum Zusammenbauen von zwei Teilen, wie beispielsweise zwei Platten, mittels einer Schraubvorrichtung mit Verankerungsmutter
Arrangement for assembling two parts such as two panels with the help of a caged nut device

(30) Priorité: 16.10.2008 FR 0857046
(43) Date de publication de la demande: 21.04.2010
(73) Titulaire: LISI Automotive Rapid, 95650 Puiseux-Pontoise (FR)
(72) Inventeur: Leon, Jean-Pierre, 78800, Houilles (FR); Perol, Rodolphe, 75015, Paris (FR)
(74) Mandataire: Thinat, Michel

(56) Documents cités:
- FR-A- 2 487 456
- US-A- 2 627 294

## Description

L'invention concerne un agencement d'assemblage de deux pièces, telles que deux panneaux, du type comprenant un dispositif écrou à cage pour monter la cage retenant l'écrou sur un premier panneau, la cage comportant une partie de logement de l'écrou et des pattes à extrémités en forme d'élément d'accrochage de la cage pour assurer la retenue de l'écrou de la première face du panneau par passage à travers d'un évidement pratiqué dans le panneau et blocage de la cage par les éléments de crochet venant en prise sur la deuxième face du panneau, derrière l'évidement, et une vis de fixation du second panneau sur la deuxième face du premier panneau lorsqu'elle est vissée dans l'écrou, la tête de la vis prenant appui sur la face libre du second panneau (cf. FR 2 487 456 A), correspondant au préambule de la revendication indépendante 1.

Des agencements de ce type, qui sont connus, présentent l'inconvénient que la longueur des pattes est adaptée à l'épaisseur du panneau sur lequel est monté la cage. Par conséquent, il faut une cage pour un groupe de panneaux dont les épaisseurs ne diffèrent que de peu. D'autre part, les pattes des cages pour des panneaux minces étant courtes, elles sont relativement rigides, si bien que les cages sont difficiles à mettre en place sur le panneau et à enlever de celui-ci, sans utilisation d'un outil approprié.

L'invention a pour but de pallier ces inconvénients.

Pour atteindre ce but, l'agencement selon l'invention comprend les caractéristiques de la revendication 1.

Selon encore une caractéristique préférable l'agencement est caractérisé en ce que la partie de logement de l'écrou de la cage présente la forme d'un U dont les branches présentent une longueur supérieure à la hauteur de l'écrou de façon que, lorsque la cage est montée sur le panneau, avec l'écrou reposant sur le fond de la cage, la partie non en regard de l'écrou en prolongeant la longueur des pattes 10 augmente la déformabilité élastique de celles-ci.

Selon encore une caractéristique préférable, l'agencement est caractérisé en ce qu'une même cage est utilisable pour une pluralité de panneaux d'épaisseurs différentes, les pattes présentant une longueur suffisante pour le montage sur le panneau le plus épais, et supérieure en conséquence à l'épaisseur du panneau le plus mince.

Selon encore une caractéristique préférable, l'agencement est caractérisé en ce que les pattes présentent des évidements adaptés pour empêcher que les pattes lors de l'assemblage des panneaux viennent en contact avec la vis.

Selon encore une caractéristique préférable, l'agencement est caractérisé en ce qu'une partie de chaque patte, en forme d'une languette, de la partie engagée dans l'évidement du premier panneau est conservée et constitue une barrette de rigidification latérale de la patte.

Selon encore une caractéristique préférable, l'agencement est caractérisé en ce qu'il comprend une cage en forme d'un U, réalisée par pliage d'un flan de départ et ayant des branches dont les parties d'extrémité sont configurées pour comporter des épaulements d'appui sur la face inférieure du premier panneau et des pattes de montage à extrémité d'accrochage, et en ce que la face interne des branches présente des bossages d'écartement des branches sous l'effet du déplacement de l'écrou dans sa position d'assemblage sous l'effet de la vis s'engageant dans l'écrou.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans desquels :
- la figure 1 est une vue en perspective de l'agencement de fixation selon l'invention dans sa position d'assemblage de deux panneaux ;
- la figure 2 est une vue en perspective de la cage retenant l'écrou selon l'invention ;
- la figure 3 est une vue en perspective montrant la cage de la figure 2 dans sa position montée sur un panneau, et
- les figures 4A à 4C illustrent schématiquement l'agencement selon l'invention dans trois positions différentes d'assemblage de deux panneaux.

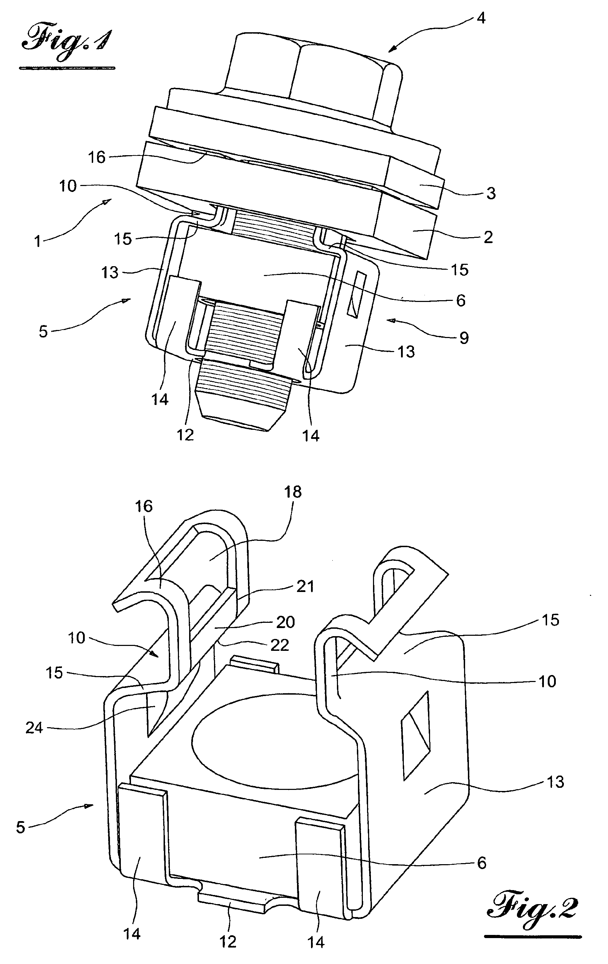

La figure 1 montre l'agencement selon l'invention 1 dans sa position d'assemblage de deux panneaux 2 et 3. L'agencement 1 comprend une cage 5 adaptée pour retenir un écrou 6 et pour le prémonter sur la face inférieure libre 7 du panneau 2 de façon que l'écrou puisse recevoir une vis 4 de fixation du deuxième panneau 3 sur le premier panneau 2 et donc d'assemblage des deux panneaux.

Plus précisément, la cage 5 comprend une partie 9 de logement de l'écrou 6, de forme générale parallélépipédique, adaptée à la forme rectangulaire de l'écrou, et deux pattes 10 de mise en place et de blocage de la cage retenant l'écrou sur le panneau 2. Les pattes sont destinées à s'étendre à travers un évidement de passage 8 pratiqué dans le panneau 2 et s'accrocher sur le panneau derrière cet évidement.

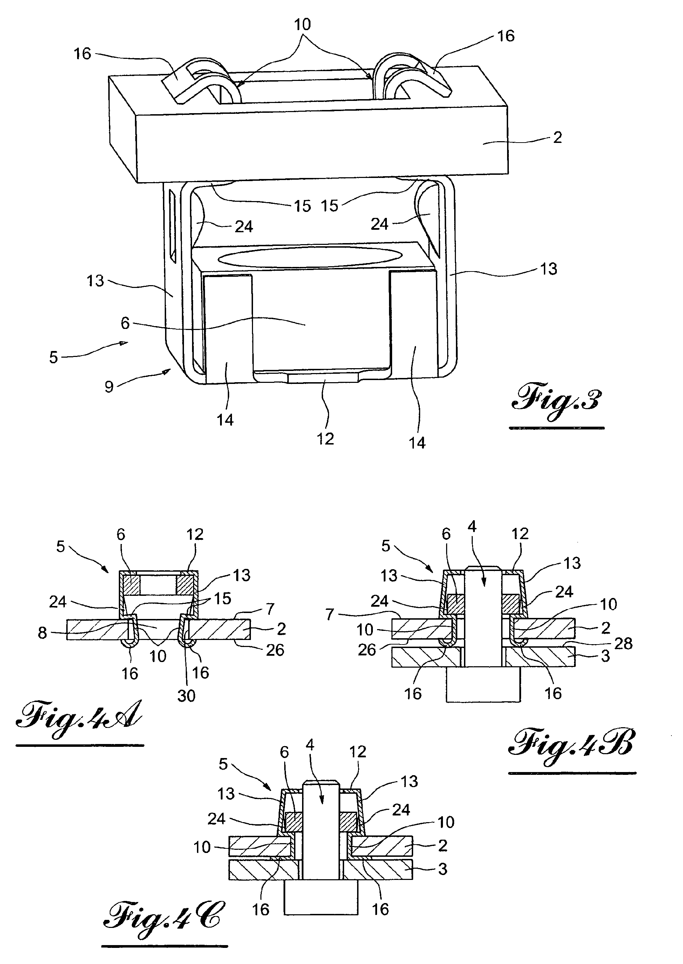

La partie 9 de logement de l'écrou présente la forme d'un U dont la base 12 sert de paroi de fond et d'appui de l'écrou et dont les branches 13 s'étendent sensiblement perpendiculairement à la base 12 et constituent des parois d'appui latérales de l'écrou. Celui-ci est emprisonné dans la partie de cage 9, aux deux autres côtés opposés de l'écrou, par des languettes de retenue 14 dont deux sont prévues au niveau de chaque bord latéral de la base 12. Ces languettes s'étendent perpendiculairement en direction des pattes 10, à partir de la base 12. Cette base présente dans sa zone centrale un évidement de passage de la vis 7 lors de son vissage dans l'écrou 6. A leurs extrémités libres, les branches latérales 13 de la cage sont recourbées, perpendiculairement, une première fois vers l'intérieur, pour former des épaulements d'appui 15 lors du montage de la cage sur le panneau 2, et une deuxième fois, pour former les pattes de montage 10 dont les extrémités libres sont recourbées vers l'extérieur pour former des éléments d'accrochage 16 de la cage sur la face arrière 26 du panneau 2, comme l'illustre la figure 3.

Comme il ressort des figures, la hauteur de la partie de logement 9 de la cage, c'est-à-dire la longueur des branches 13, est supérieure à la hauteur de l'écrou 6, par exemple de deux fois ou plus. Etant donné que lors du montage de la cage sur le panneau 2, l'écrou 6 repose sur le fond du logement 9, comme on le voit sur la figure 2, la flexibilité intrinsèque des pattes 10 lors du montage est augmentée par la longueur libre des branches 13, c'est-à-dire la partie de branche qui n'est pas en regard de l'écrou.

D'autre part, les pattes 10 ne sont pas pleines et présentent chacune un évidement 18 dont les bords sont parallèles aux bords extérieurs des parois. Ces évidements empêchent que les pattes 10 lors du serrage de la vis se déformant par arrondissement vers l'intérieur en direction de la vis, viennent en contact avec la vis et frotte sur le filetage de celle-ci. Grâce aux évidements, on supprime ce défaut. Pour agir contre la diminution de la rigidité en torsion de la cage, qui en résulte, chaque patte 10 conserve au niveau de sa naissance une partie transversale en forme de barrette 20 qui reste reliée à l'épaulement correspondant 15 mais est découpée le long du bord latéral 21 de l'évidement jusqu'au niveau du pli 22. La barrette transversale 20 s'oppose à une déformation notamment en torsion de la partie des pattes 10, qui est engagée dans l'évidement de passage 8 pratiqué dans le panneau 2, lors du serrage de la vis et assure la rigidité de la cage lors du serrage

On constate encore, notamment en se référant à la figure 2, que chaque branche latérale 13 de la cage porte, sur sa face interne, en dessous de l'épaulement 15 qui fait suite à cette branche, un bossage 24 destiné à produire un écartement des branches lorsque l'écrou 6 se déplace de sa position de repos sur la paroi de base 12 en direction de la face inférieure libre du panneau lorsque la vis s'engage dans l'écrou, lors de l'assemblage des deux panneaux. La figure 1 montre l'écrou dans sa position finale, à la fin de l'assemblage, dans laquelle la face supérieure de l'écrou est en appui contre la face interne des épaulements 15.

Les figures 4A à 4C illustrent le dispositif selon l'invention dans trois phases significatives du processus d'assemblage des deux tôles 2 et 3.

La figure 4A montre le montage de la cage enfermant l'écrou 6 sur le premier panneau 2. L'écrou 6 est en appui sur la paroi de fond 12 de la cage. Les pattes de montage 10 dont la longueur est supérieure à l'épaisseur du panneau s'étendent à travers l'évidement 8 du panneau. La flexibilité des pattes augmentée par la longueur libre des branches 13, c'est-à-dire non en regard de l'écrou, et permet un montage manuel, du fait que les pattes sont suffisamment élastiquement déformables pour pouvoir s'approcher lors de leur engagement dans l'évidement 8 et ensuite s'écarter pour que les éléments d'accrochage 16 puissent venir en prise derrière l'évidement, sur la face arrière 26 de celui-ci. La longueur des pattes est choisie de façon à avoir une longueur bien supérieure à l'épaisseur du panneau le plus mince auquel la cage est applicable et de façon à ce que cette cage soit encore utilisable pour plusieurs panneaux d'une épaisseur progressivement croissante.

La figure 4B montre l'agencement à une phase d'assemblage intermédiaire. A ce stade, le deuxième panneau 3 est en train d'être fixé sur le premier panneau 2 sous l'effet de la vis 4 qui s'engage dans l'écrou 6. La face 28 du panneau 3, en regard de la face arrière 26 du panneau 1 vient en contact avec les éléments d'accrochage 16 des pattes de montage 10. La tête de la vis prend appui sur la face externe 29 du panneau 3. Lors du vissage, l'écrou 6 se déplace de sa position sur la base 12 de la cage (figure 4A) vers les épaulements 15 de la cage alors en appui contre la face inférieure libre 7 du premier panneau 2. Les branches latérales 13 de la cage sont écartées et ainsi les pattes de montage 10 déplacées vers les bords 30 de l'évidement du panneau 2, par l'engagement de l'écrou sur les bossages 24 sous les épaulements.

La figure 4C montre l'agencement à la fin de l'assemblage des deux panneaux, c'est-à-dire au stade que montre aussi la figure 1. Le serrage de la vis 9 a pour effet que les deux panneaux soient serrés l'un contre l'autre en écrasant entre eux les éléments d'accrochage 16. Les barrettes de rigidification 20 ne se déforment pas, alors que les pattes 10 se déforment en s'arrondissant vers l'intérieur, mais sans interférer avec le filetage de la vis.

Il est à noter que les barrettes 20 présentent une hauteur qui est inférieure à l'épaisseur du panneau le plus mince pour lequel la cage est utilisable.

Il est encore à noter que les cages sont réalisées, de façon connue en soi, par découpe d'un flan d'un feuillard et sont ensuite formées dans une presse par déformation du flan autour de l'écrou posé sur ce flan.

A titre d'exemple, il est possible, conformément à l'invention, de réaliser une cage ayant une longueur de patte suffisante pour pouvoir être montée sur des panneaux dont l'épaisseur varie entre 0,7 à 1,7 millimètres. Une deuxième cage pourrait être utilisable pour des tôles entre 1,7 et 3 millimètres d'épaisseur et une troisième pour des panneaux d'une épaisseur comprise entre 3 millimètres et 4,5 millimètres.

## Revendications

1. Agencement d'assemblage de deux pièces, telles que des panneaux, du type comprenant un dispositif écrou à cage pour monter la cage (5) retenant l'écrou (6) sur une première face (7) d'un premier panneau (2), la cage présentant la forme d'un U et comportant une partie (9) de logement de l'écrou et des pattes (10) à extrémités en forme d'éléments d'accrochage (16) de la cage sur le panneau, et une vis (4) de fixation du second panneau (3) sur la deuxième face (26) du premier panneau lorsqu'elle est vissée dans l'écrou, la tête de la vis prenant appui sur la face extérieure libre du second panneau (3), **caractérisé en ce que** les pattes (10) sont élastiquement déformables de façon à permettre un montage manuel de la cage (5) sur la première face (7) du premier panneau (2), par rapprochement manuel des pattes, entre une position rapprochée de passage des pattes à travers un évidement (8) pratiqué dans le premier panneau (2) et une position écartée de blocage par des éléments d'accrochage (16) sur la deuxième face (26) de panneau (2), derrière l'évidement (8) sans passage de la cage à travers cet évidement (8), les pattes étant configurées de façon que leur partie engagée dans l'évidement sont indéformables en torsion à l'intérieur de l'évidement.

2. Agencement selon la revendication 1, **caractérisé en ce que** la partie (9) de logement de l'écrou (6) de la cage (5) présente la forme d'un U dont les branches (13) présentent une longueur supérieure avantageusement au moins de deux fois à la hauteur de l'écrou de façon que, lorsque la cage est montée sur le panneau (2), avec l'écrou reposant sur le fond (12) de la cage, la partie non en regard de l'écrou en prolongeant la longueur des pattes 10 augmente la déformabilité élastique de celles-ci.

3. Agencement selon l'une des revendications 1 ou 2, **caractérisé en ce qu'**une même cage (5) est utilisable pour une pluralité de panneaux (2) d'épaisseurs différentes, les pattes (10) présentant une longueur suffisante pour le montage sur le panneau (2) le plus épais, et supérieure en conséquence à l'épaisseur du panneau le plus mince.

4. Agencement selon l'une des revendications 1 à 3, **caractérisé en ce que** les pattes (10) présentent des évidements (18) adaptés pour empêcher que les pattes lors de l'assemblage des panneaux viennent en contact avec la vis (4).

5. Agencement selon la revendication 4, **caractérisé en ce qu'**une partie de chaque patte (10), en forme d'une languette (20), engagée dans l'évidement (8) du premier panneau (2) est conservée et constitue une barrette de rigidification latérale de la patte.

6. Agencement selon la revendication 5, **caractérisé en ce que** la barrette de rigidification (20) précitée est découpée le long du bord latéral (21) de l'évidement de façon à s'opposer à une déformation notamment en rotation de la partie de patte (10) engagée dans l'évidement de passage (8) lors du serrage de la vis.

7. Agencement selon l'une des revendications 5 ou 6, **caractérisé en ce que** les barrettes de rigidification (20) ne se déforment pas lors de l'arrondissement des pattes vers l'intérieur du passage lors d'un serrage de la vis.

8. Agencement selon l'une des revendications 2 à 7, **caractérisé en ce que** les branches (13) précitées de la cage (5) présentent chacune sur sa face inférieure dans la partie occupée par l'écrou (6) lorsque la vis (4) est serrée, un bossage (24) adapté pour écarter les branches (13) et déplacer les pattes (10) vers le bord (30) de l'évidement (8) par l'engagement de l'écrou (6) sur les bossages lors du serrage de la vis.

9. Agencement selon l'une des revendications 1 à 3, **caractérisé en ce qu'**il comprend une cage en forme d'un U, réalisée par pliage d'un flan de départ et ayant des branches dont les parties d'extrémité sont configurées pour comporter des épaulements (15) d'appui sur la première face (7) du premier panneau (2) et des pattes de montage (10) à extrémité d'accrochage (16), et **en ce que** la face interne des branches (13) présente des bossages (24) d'écartement des branches sous l'effet du déplacement de l'écrou (6) dans sa position d'assemblage sous l'effet de la vis (4) s'engageant dans l'écrou (6).

## Claims

1. An arrangement for assembling two parts, such as panels, of the type comprising a caged nut device to mount the cage (5) holding the nut (6) on a first surface (7) of a first panel (2), the cage assuming a U shape and including a part (9) for housing the nut and lugs (10) at the ends in the shape of catching elements (16) for catching the cage on the panel, and a screw (4) for fastening the second panel (3) on the second face (26) of the first panel when it is screwed in the nut, the head of the screw bearing on the free outer surface of the second panel (3), **characterized in that** the lugs (10) are elastically deformable so as to allow manual mounting of the cage (5) on the first surface (7) of the first panel (2), by manually bringing the lugs closer together, between a close position for passage of the lugs through a recess (8) formed in the first panel (2) and a separated locking position by catching elements (16) on the second panel (2) surface (26), behind the recess (8) without passage of the cage through said recess (8), the lugs being configured so that their part engaged in the recess cannot be torsionally deformed inside the recess.

2. The arrangement according to claim 1, **characterized in that** the housing part (9) of the nut (6) of the cage (5) assumes the shape of a U whereof the branches (13) have a length advantageously greater than at least twice the height of the nut so that, when the cage is mounted on the panel (2), with the nut resting on the bottom (12) of the cage, the part not opposite the nut extending the length of the lugs (10) increases the elastic deformability thereof.

3. The arrangement according to one of claims 1 or 2, **characterized in that** a same cage (5) can be used for a plurality of panels (2) with different thicknesses, the lugs (10) having a sufficient length for mounting on the thickest panel (2), and consequently greater than the thickness of the thinnest panel.

4. The arrangement according to one of claims 1 to 3, **characterized in that** the lugs (10) have recesses (18) adapted to prevent the lugs from coming into contact with the screw (4) during assembly of the panels.

5. The arrangement according to claim 4, **characterized in that** a part of each lug (10), in the shape of a tab (20), engaged in the recess (8) of the first panel (2) is kept and constitutes a lateral stiffening strip of the lug.

6. The arrangement according to claim 5, **characterized in that** the aforementioned stiffening strip (20) is cut out along the lateral edge (21) of the recess so as to oppose a deformation, in particular a rotational deformation, of the lug part (10) engaged in the passage housing (8) when the screw is tightened.

7. The arrangement according to one of claims 5 or 6, **characterized in that** the stiffening strips (20) do not deform upon rounding of the lugs toward the inside of the passage upon tightening of the screw.

8. The arrangement according to one of claims 2 to 7, **characterized in that** the aforementioned branches (13) of the cage (5) each have, on their inner surfaces in the part occupied by the nut (6) when the screw (4) is tightened, a boss (24) adapted to move the branches (13) apart and move the lugs (10) toward the edge (30) of the recess (8) by engaging the nut (6) on the bosses during tightening of the screw.

9. The arrangement according to one of claims 1 to 3, **characterized in that** it comprises a U-shaped cage, made by folding a starting blank and having branches whereof the end portions are configured to include shoulders (15) bearing on the first surface (7) of the first panel (2) and mounting lugs (10) with catch ends (16), and **in that** the inner surface of the branches (13) has bosses (24) for spacing the branches apart under the effect of the movement of the nut (6) in its assembly position under the effect of the screw (4) engaging in the nut (6).

## Patentansprüche

1. Anlage zum Zusammenbau von zwei Teilen, wie beispielsweise Platten, der Bauart, die eine Schraubvorrichtung mit Verankerungsmutter umfasst, um die die Mutter (6) haltende Schraubvorrichtung (5) auf einer ersten Seite (7) einer ersten Platte (2) zu befestigen, wobei die Schraubvorrichtung U-förmig ist und einen Aufnahmeabschnitt (9) der Mutter und der Füße (10) mit Enden in Form von Verankerungselementen (16) der Schraubvorrichtung auf der Platte aufweist, und eine Befestigungsschraube (4) der zweiten Platte (3) auf der zweiten Seite (26) der ersten Platte, wenn sie in die Mutter geschraubt ist, wobei sich der Schraubenkopf auf der freien Außenseite der zweiten Platte (3) abstützt, **dadurch gekennzeichnet, dass** die Füße (10) derart elastisch verformbar sind, dass eine manuelle Montage der Schraubvorrichtung (5) auf der ersten Seite (7) der ersten Platte (2) durch manuelle Annäherung der Füße zwischen einer angenäherten Durchgangsstellung der Füße durch eine in die erste Platte (2) eingearbeitete Aussparung (8) und einer gespreizten Blockierstellung der Verankerungselemente (16) auf der zweiten Seite (26) der Platte (2) hinter der Aussparung (8) ohne Durchgang der Schraubvorrichtung durch diese Aussparung (8) ermöglicht wird, wobei die Füße derart konfiguriert sind, dass ihr Abschnitt, der in die Aussparung eingebracht ist, in der Aussparung durch Verdrehen unverformbar ist.

2. Anlage nach Anspruch 1, **dadurch gekennzeichnet, dass** der Aufnahmeabschnitt (9) der Mutter (6) der Schraubvorrichtung (5) die Form eines U aufweist, dessen Arme (13) in vorteilhafter Weise mindestens zweimal länger sind als die Schraube hoch ist, so dass, wenn die Schraubvorrichtung mit der auf dem Boden (12) der Schraubvorrichtung aufsitzenden Mutter auf der Platte (2) montiert ist, der Abschnitt, der in Verlängerung der Länge der Füße (10) nicht der Mutter gegenüberliegt, ihre elastische Verformbarkeit erhöht.

3. Anlage nach einem der Ansprüche 1 oder 2, **dadurch gekennzeichnet, dass** ein und dieselbe Schraubvorrichtung (5) für eine Vielzahl von Platten (2) unterschiedlicher Dicken verwendbar ist, wobei die Füße (10) eine für die Montage auf der dicksten Platte (2) ausreichende und folglich größere Länge als die Dicke der dünnsten Platte aufweisen.

4. Anlage nach einem der Ansprüche 1 bis 3, **dadurch gekennzeichnet, dass** die Füße (10) Aussparungen (18) aufweisen, die geeignet sind zu verhindern, dass die Füße bei der Montage der Platten mit der Schraube (4) in Berührung kommen.

5. Anlage nach Anspruch 4, **dadurch gekennzeichnet, dass** ein Abschnitt jedes Fußes (10) in Form einer Zunge (20), die in die Aussparung (8) der ersten Platte (2) eingreift, beibehalten wird und einen seitlichen Versteifungsstab des Fußes darstellt.

6. Anlage nach Anspruch 5, **dadurch gekennzeichnet, dass** der vorgenannte Versteifungsstab (20) entlang des seitlichen Randes (21) der Aussparung derart abgeteilt ist, dass beim Anziehen der Schraube einer vor allem rotierenden Verformung des Abschnitts des Fußes (10), der in die Durchgangsaussparung (8) eingreift, entgegengewirkt wird.

7. Anlage nach einem der Ansprüche 5 oder 6, **dadurch gekennzeichnet, dass** sich die Versteifungsstäbe (20) bei der Rundung der Füße in Innenrichtung des Durchgangs beim Anziehen der Schraube nicht verformen.

8. Anlage nach einem der Ansprüche 2 bis 7, **dadurch gekennzeichnet, dass** die vorgenannten Arme (13) der Schraubvorrichtung (5) jeweils auf ihrer Unterseite in dem Abschnitt, der von der Mutter (6) besetzt wird, wenn die Schraube (4) angezogen wird, eine Wulst (24) aufweisen, die beim Anziehen der Schraube die Arme (13) spreizt und die Füße (10) durch Führen der Mutter (6) über die Wülste in Richtung Rand (30) der Aussparung (8) verschiebt.

9. Anlage nach einem der Ansprüche 1 bis 3, **dadurch gekennzeichnet, dass** sie eine U-förmige Schraubvorrichtung umfasst, die durch Biegen einer Ausgangsplatte hergestellt wird und die Arme hat, deren Endabschnitte konfiguriert sind, um Stützabsätze (15) auf der ersten Seite (7) der ersten Platte (2) und Montagefüße (10) mit Verankerungsende (16) zu haben, und dass die Innenseite der Arme (13) Wülste (24) aufweist, die die Arme durch Verschieben der Mutter (6) in ihre Verbindungsstellung durch Einwirken der Schraube (4), die sich in die Mutter (6) einschraubt, spreizen.
